# EUROPEAN PATENT APPLICATION

(11) **EP 4 686 126 A1**
(43) Date of publication of application: **28.01.2026**
(21) Application number: 23927924.3
(22) Date of filing: 20.03.2023
(51) Int. Cl.: H04L 5/00

(54) **WIRELESS COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: QI, Yinan, Dongguan, Guangdong 523860 (CN)
(74) Representative: Taor, Simon Edward William
(86) International application number: PCT/CN2023/082400
(87) International publication number: WO 2024/192606

(57) **Abstract**

A wireless communication method and devices. The method comprises: a sender device sends a preamble signal and a target signal, wherein the preamble signal is before the target signal, and the preamble signal is used for indicating that a target receiving device of the target signal is an ambient power (AMP) device.

## Description

### TECHNICAL FIELD

Embodiments of the present application relate to the field of communications, and relate specifically to a method for wireless communication and devices.

### BACKGROUND

In view of the low complexity, low power consumption, low cost, and maintenance-free characteristics of ambient power enabled Internet-of-Things (ambient power enabled IoT, also refers to ambient IoT or AMP IoT or AMP for short) devices, large-scale deployment is envisaged. However, because the capabilities of AMP devices and legacy devices in communication systems are greatly different, how to enable the coexistence of AMP devices and legacy devices is an urgent issue that needs to be addressed.

### SUMMARY

The present application provides a method for wireless communication and devices, which can enable the coexistence of AMP devices and legacy devices in communication systems.

In a first aspect, there is provided a method for wireless communication, including: transmitting, by a transmitting end device, a preamble signal and a target signal. The preamble signal is ahead of the target signal, and the preamble signal is used to indicate that a target receiving device of the target signal is an ambient power (AMP) device.

In a second aspect, there is provided a method for wireless communication, including: transmitting, by a transmitting end device, a target signal. A time domain resource for transmitting a preamble signal is reserved ahead of the target signal, and a target receiving device of the target signal is an ambient power (AMP) device.

In a third aspect, there is provided a method for wireless communication, including: receiving, by a receiving end device, a preamble signal transmitted by a transmitting end device. The receiving end device is not an ambient power (AMP) device; and determining, according to the preamble signal, whether a target receiving device of a signal after the preamble signal is an AMP device.

In a fourth aspect, there is provided a transmitting end device, configured to perform the method in any one of the first to second aspects or in any implementation of the first to second aspects.

Specifically, the transmitting end device comprises a functional module configured to perform the method in any one of the first to second aspects or in any implementation of the first to second aspects.

In a fifth aspect, there is provided a receiving end device, configured to perform the method in the third aspect or in any implementation of the third aspect.

Specifically, the receiving end device comprises a functional module configured to perform the method in the third aspect or in any implementation of the third aspect.

In a sixth aspect, there is provided a transmitting end device, comprising a processor and a memory. The memory is configured to store a computer program, and the processor is configured to invoke and run the computer program stored in the memory to perform the method in any one of the first to second aspects or in any implementation of the first to second aspects.

In a seventh aspect, there is provided a receiving device, comprising a processor and a memory. The memory is configured to store a computer program, and the processor is configured to invoke and run the computer program stored in the memory to perform the method in the third aspect or in any implementation of the third aspect.

In an eighth aspect, there is provided a chip, configured to implement the method in any one of the first to third aspects or in any implementation of the first to third aspects. Specifically, the chip comprises: a processor, configured to invoke and run a computer program from a memory, so that a device having the chip installed therein performs the method in any one of the first to third aspects or in any implementation of the first to third aspects.

In a ninth aspect, there is provided a computer-readable storage medium, configured to store a computer program that causes a computer to perform the method in any one of the first to third aspects or in any implementation of the first to third aspects.

In a tenth aspect, there is provided a computer program product, comprising computer program instructions that cause a computer to perform the method in any one of the first to third aspects or in any implementation of the first to third aspects.

In an eleventh aspect, there is provided a computer program, wherein the computer program, when run on a computer, causes a computer to perform the method in any one of the first to third aspects or in any implementation of the first to third aspects.

By means of the foregoing technical solutions, a transmitting end device can transmit a preamble signal and a target signal, and uses the preamble signal to indicate that a target receiving device of the subsequent target signal is an AMP device. In this way, a legacy device can ascertain through the preamble signal that an AMP device is occupying a channel, thereby ensuring the compatibility of the AMP device and the legacy device when they coexist in the communication system.

### BRIEF DESCRIPTION OF THE DRAWINGS

FIG. 1 is a schematic diagram of a communication system architecture provided in an embodiment of the present application.
FIG. 2 is a schematic diagram of a zero-power communication system according to an example of the present application.
FIG. 3 is a schematic diagram of power harvesting according to an embodiment of the present application.
FIG. 4 is a schematic diagram of back scattering communication according to an embodiment of the present application.
FIG. 5 is a circuit schematic diagram of resistive load modulation according to an embodiment of the present application.
FIG. 6 is a schematic interaction diagram of a method for wireless communication provided according to an embodiment of the present application.
FIG. 7 is a schematic diagram of an AMP frame format provided in an embodiment of the present application.
FIG. 8 is a schematic diagram of another AMP frame format provided in an embodiment of the present application.
FIG. 9 is a schematic interaction diagram of another method for wireless communication provided according to an embodiment of the present application.
FIG. 10 is a schematic diagram of still another AMP frame format provided in an embodiment of the present application.
FIG. 11 is a schematic block diagram of a transmitting end device provided according to an embodiment of the present application.
FIG. 12 is a schematic block diagram of another transmitting end device provided according to an embodiment of the present application.
FIG. 13 is a schematic block diagram of a receiving end device provided according to an embodiment of the present application.
FIG. 14 is a schematic block diagram of a communication device provided according to an embodiment of the present application.
FIG. 15 is a schematic block diagram of a chip provided according to an embodiment of the present application.
FIG. 16 is a schematic block diagram of a communication system provided according to an embodiment of the present application.

### DETAILED DESCRIPTION

The technical solutions in the embodiments of the present application are described below with reference to the drawings in the embodiments of the present application. Evidently, the described embodiments are part of the embodiments of the present application, rather than all of the embodiments. For the embodiments in the present application, all other embodiments arrived at by a person of ordinary skill in the art without involving inventive effort fall within the scope of protection of the present application.

The technical solution of the embodiments of the present application is applicable to various communication systems, such as a Global System of Mobile Communication (GSM), a Code Division Multiple Access (CDMA) system, a Wideband Code Division Multiple Access (WCDMA) system, a General Packet Radio Service (GPRS), a Long-Term Evolution (LTE) system, an Advanced Long-Term Evolution (LTE-A) system, a New Radio (NR) system, an evolved system of an NR system, an LTE-based access to unlicensed spectrum (LTE-U) system, an NR-based access to unlicensed spectrum (NR-U) system, a Non-Terrestrial Network (NTN) system, a Universal Mobile Telecommunication System (UMTS), a Wireless Local Area Network (WLAN), Wireless Fidelity (WiFi), a 5th-generation (5G) communication system, a cellular Internet of Things system, a cellular passive Internet of Things system or other communication systems.

Generally speaking, conventional communication systems support a limited number of connections and are easy to implement. However, with the development of communication technologies, mobile communication systems will not only support conventional communications, but also support, for example, Device to Device (D2D) communication, Machine to Machine (M2M) communication, Machine Type Communication (MTC), Vehicle to Vehicle (V2V) communication, and Vehicle to Everything (V2X) communication, etc. The embodiments of the present application are also applicable to these communication systems.

Optionally, the communication system in an embodiment of the present application may be applicable to a Carrier Aggregation (CA) scenario, a Dual Connectivity (DC) scenario, or a Standalone (SA) deployment scenario.

Optionally, the communication system in an embodiment of the present application may be applicable to an unlicensed spectrum. Tthe unlicensed spectrum may also be considered as a shared spectrum. Alternatively, the communication system in the embodiment of the present application may also be applicable to a licensed spectrum. The licensed spectrum may also be considered as an unshared spectrum.

The embodiments of the present application describe various embodiments in conjunction with a network device and a terminal device, wherein the terminal device may also be referred to as a user equipment (UE), an access terminal, a user unit, a user station, a mobile station, a mobile site, a remote station, a remote terminal, a mobile device, a user terminal, a terminal, a wireless communication device, a user agent, or a user apparatus, etc.

In the embodiments of the present application, the network device may be a device used to communicate with a mobile device, and the network device may be an Access Point (AP) in a WLAN, a Base Transceiver Station (BTS) in GSM or CDMA, a NodeB (NB) in WCDMA, an Evolutional Node B (eNB or eNodeB) in LTE, a relay station or an access point, a vehicle-mounted device, a wearable device, a network device (gNB) in an NR network, a network device in cellular Internet of Things, a network device in cellular passive Internet of Things, a network device in a future evolved PLMN network, a network device in an NTN network, or the like.

As an example rather than a limitation, in the embodiments of the present application, the network device may have mobile characteristics. For example, the network device may be a mobile device. Optionally, the network device may be a satellite or a balloon station. For example, the satellite may be a Low-Earth Orbit (LEO) satellite, a Medium-Earth Orbit (MEO) satellite, a Geostationary Earth Orbit (GEO) satellite, a High Elliptical Orbit (HEO) satellite, or the like. Optionally, the network device may also be a base station disposed on land, in water, etc.

In the embodiments of the present application, the network device may serve a cell, and the terminal device communicates with the network device by means of a transmission resource (for example, a frequency domain resource or a spectrum resource) used by the cell. The cell may be a cell corresponding to the network device (for example, a base station). The cell may belong to a macro base station or a base station corresponding to a small cell. The small cell herein may include: a metro cell, a micro cell, a pico cell, a femto cell, etc. These small cells have the characteristics of small coverage and low transmit power, and are suitable for providing high-rate data transmission services.

The terminal device may be a station (ST) in a WLAN, a cellular phone, a cordless phone, a Session Initiation Protocol (SIP) phone, a Wireless Local Loop (WLL) station, a Personal Digital Assistant (PDA) device, a handheld device having a wireless communication function, a computing device or another processing device connected to a wireless modem, a vehicle-mounted device, a wearable device, a terminal device in a next-generation communication system such as an NR network, or a terminal device in a future evolved Public Land Mobile Network (PLMN) network, a terminal device in cellular Internet of Things, a terminal device in cellular passive Internet of Things, or the like.

In the embodiments of the present application, the terminal device may be deployed on land, including an indoor or outdoor device, a handheld device, a wearable device, or a vehicle-mounted device, may also be deployed on the surface of water (such as a ship, etc.), and may also be deployed in the air (e.g., on an airplane, a balloon, a satellite, etc.).

In the embodiments of the present application, the terminal device may be a mobile phone, a tablet computer (Pad), a computer with a wireless transceiving function, a virtual reality (VR) terminal device, an augmented reality (AR) terminal device, a wireless terminal device in industrial control, a wireless terminal device in self-driving, a wireless terminal device in remote medical care, a wireless terminal device in a smart grid, a wireless terminal device in transportation safety, a wireless terminal device in a smart city, a wireless terminal device in a smart home, etc.

As an example rather than a limitation, in the embodiments of the present application, the terminal device may also be a wearable device. The wearable device may also be referred to as a wearable smart device, and is a general term for wearable devices that are developed by intelligently designing daily wear employing wearable technology, such as glasses, gloves, watches, clothes, and shoes. The wearable device is a portable device directly worn on the body or integrated into the clothing or accessories of a user. The wearable device is not only a hardware device, but also realize powerful functions by means of software support, data interaction, and cloud interaction. Broadly speaking, wearable smart devices include devices that are fully functional and large in size, and can implement complete or partial functions without dependence on smart phones, such as smart watches or smart glasses, and devices that only focus on a certain type of application function and need to be used in cooperation with other devices such as smart phones, such as various smart bracelets, smart jewelry, etc., for monitoring physical signs.

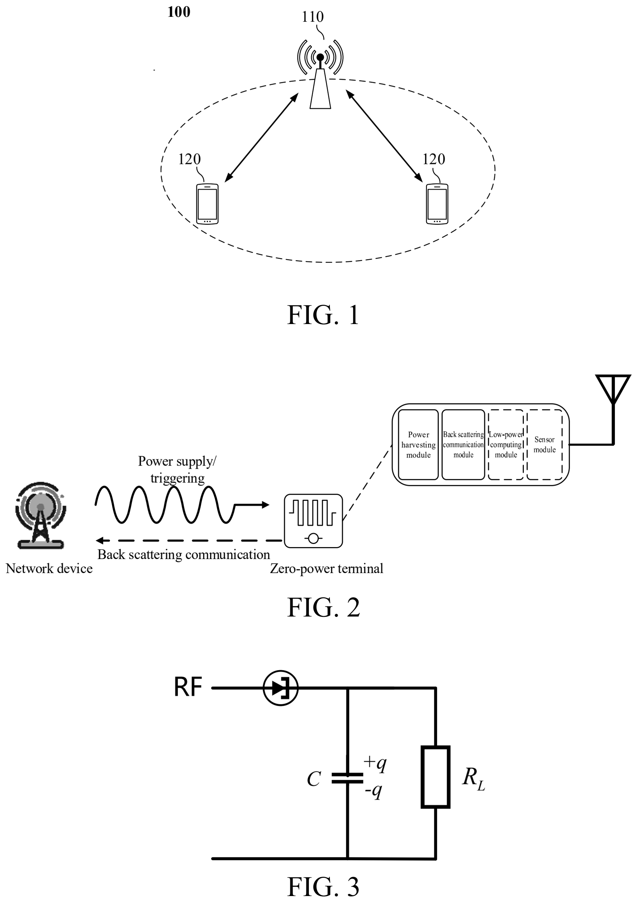

As an example, a communication system 100 applicable in an embodiment of the present application is shown in FIG. 1. The communication system 100 may include a network device 110, and the network device 110 may be a device that communicates with a terminal 120 (or referred to as a communication terminal or a terminal). The network device 110 can provide communication coverage for a particular geographic region, and can communicate with a terminal device located within the coverage region.

FIG. 1 illustratively shows one network device and two terminal devices. Optionally, the communication system 100 may include a plurality of network devices, and within the coverage range of each network device may be any number of terminal devices. The embodiments of the present application are not limited thereto.

Optionally, the communication system 100 may further include a network controller, a mobile management entity, and other network entities. The embodiments of the present application are not limited thereto.

It should be understood that a device having a communication function in the network/system in the embodiments of the present application may be referred to as a communication device. Using the communication system 100 shown in FIG. 1 as an example, the communication device may include a network device 110 and a terminal device 120 having a communication function. The network device 110 and the terminal device 120 may be specific devices described above, and details are not described herein again. The communication device may further include other devices in the communication system 100, such as a network controller, a mobility management entity, and other network entities, and the embodiments of the present application are not limited thereto.

It is to be understood that the terms "system" and "network" herein are often used interchangeably herein. The term "and/or" herein is merely to describe the associations between associated items, indicating that there can be three kinds of relationships. For example, A and/or B, which may indicate three situations in which A exists alone, A and B exist simultaneously, or B exists alone. In addition, the character "/" herein generally indicates that the associated items before and after this character are in an "or" relationship.

It should be understood that the term "indicating" mentioned in the embodiments of the present application may denote a direct indication or an indirect indication, or may also represent an association. For example, A indicating B may mean that A directly indicates B, for example, B may be obtained from A; it may also mean that A indirectly indicates B, for example, A indicates C, and B may be obtained from C; it may also mean that there is an association between A and B.

In the description of the embodiments of the present application, the term "corresponding" may denote a direct correspondence or an indirect correspondence between two items, or may denote an association therebetween, or relationships such as indicating and being indicated or configuring and being configured, etc.

In the embodiments of the present application, "predefine" may be implemented by pre-storing corresponding codes, tables, or other means available for indicating relevant information in a device (e.g., including a terminal device and a network device), and the present application does not limit the specific implementation thereof. For example, "predefine" may refer to definitions specified in a protocol.

In the embodiments of the present application, the "protocol" may refer to a standard protocol in the field of communications, for example, including LTE protocols, NR protocols, and related protocols applied to future communication systems, and the present application is not limited thereto.

To facilitate understanding of the technical solution of the embodiments of the present application, the related art of the present application will be described below.

### I. Zero-power Communication

Key technologies for zero-power communication include power harvesting, back scattering communication, and low-power technologies.

As shown in FIG. 2, a typical zero-power communication system (for example, an RFID system) includes a network device (for example, a reader/writer of the RFID system) and a zero-power device (for example, an electronic tag). The network device is used to transmit a wireless power supply signal and a downlink communication signal to the zero-power device, and receive a backscatter signal of the zero-power device. A basic zero-power device includes a power harvesting module, a back scattering communication module, and a low-power computing module. In addition, the zero-power device may further include a memory or a sensor configured to store some basic information (for example, an item identifier) or sensing data such as ambient temperature and ambient humidity.

For example, the power harvesting module may harvest the power carried by radio waves in a space (radio waves emitted by a network device as shown in FIG. 2), and be used to drive the low-power computing module of the zero-power device and implement back scattering communication. After obtaining the power, the low-power device may receive a control command of the network device, and transmit data to the network device in a backscatter manner on the basis of control signaling. The transmitted data may be data stored in the zero-power device itself (such as an identifier or pre-written information such as the production date, brand, and manufacturer of a commodity). The zero-power device may also be loaded with various sensors, thereby reporting data collected by the various sensors on the basis of a zero-power mechanism.

Hereinafter, key technologies in zero-power communication will be described.

### 1. RF Power Harvesting

As shown in FIG. 3, an RF power harvesting module harvests power from spatial electromagnetic waves on the basis of the principle of electromagnetic induction, thereby obtaining power required for driving a zero-power device to work, for example, for driving low-power demodulation and modulation modules, sensors, and memory-read operations. Therefore, the zero-power device does not require a conventional battery.

### 2. Back Scattering Communication

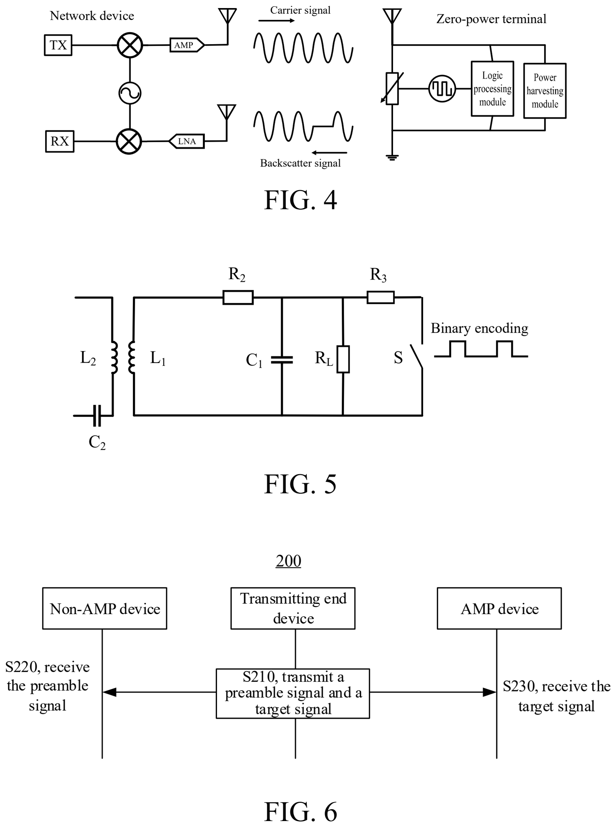

As shown in FIG. 4, a zero-power device receives a carrier signal transmitted by a network device, modulates the carrier signal, loads information that needs to be transmitted, and radiates the modulated signal from an antenna, and this information transmission process is referred to as back scattering communication. Back scattering and load modulation functions are inseparable. Load modulation adjusts and controls circuit parameters of an oscillation loop of the zero-power device in synchronization with the data stream, so that parameters such as the impedance magnitude of the zero-power device change accordingly, thereby completing the modulation process. The load modulation technology mainly includes two modes: resistive load modulation and capacitive load modulation. In resistive load modulation, a load is connected in parallel with a resistor and the resistor is connected or disconnected on the basis of the control of a binary data stream, as shown in FIG. 5. Connecting or disconnecting the resistor will cause a change in the circuit voltage, thereby achieving amplitude shift keying (ASK) modulation, that is, signal modulation and transmission are realized by adjusting the amplitude of the backscatter signal of the zero-power device. Similarly, in capacitive load modulation, a change in the resonant frequency of the circuit can be realized by connecting or disconnecting a capacitor, thereby achieving frequency shift keying (FSK) modulation, that is, signal modulation and transmission are realized by adjusting the operating frequency of the backscatter signal of the zero-power device.

It can be seen that the zero-power device performs information modulation on an incoming signal by means of load modulation, thereby implementing the back scattering communication process. Therefore, the zero-power device has the following significant advantages:
(1) it does not actively transmit signals, so it does not require complex RF links, such as PA, RF filters, etc.;
(2) it does not need to actively generate a high-frequency signal, so there is no need for a high-frequency crystal oscillator; and
(3) by means of back scattering communication, the signal transmission of the terminal does not need to consume the terminal's own power.

### 3. Encoding Techniques

Data transmitted by a zero-power device may represent binary "1"s and "0"s by using different forms of codes. RF identification systems typically use one of the following encoding methods: non-return-to-zero (NRZ) encoding, Manchester encoding, unipolar return-to-zero encoding, differential binary phase (DBP) encoding, differential encoding, pulse interval encoding (PIE), bi-phase space encoding (FM0), Miller encoding, differential encoding, etc. Simply put, different encoding techniques use different pulse signals to represent 0s and 1s.

In some scenarios, on the basis of power sources and usage modes of zero-power devices, the zero-power devices may be classified into the following types:

### 1. Passive zero-power devices

Zero-power devices (such as electronic tags in RFID systems) do not require built-in batteries. When a zero-power device is approaching a network device (for example, a reader/writer of an RFID system), the zero-power device is located within a near field range formed by antenna radiation of the network device. Therefore, an antenna of the zero-power device generates an induced current through electromagnetic induction, and the induced current drives a low-power chip circuit of the zero-power device, enabling demodulation of a forward link signal, modulation of a backward link (or referred to as a reflection link) signal, and other operations. For a backscatter link, the zero-power device performs signal transmission by using a backscatter implementation approach.

It can be seen that passive zero-power devices do not need a built-in battery to drive either the forward link or the backward link, and are zero-power devices in the truest sense.

Passive zero-power devices do not require a battery, and both RF and baseband circuits thereof are very simple. For example, devices such as low noise amplifiers (LNAs), power amplifiers (PAs), crystal oscillators, and analog-to-digital converters (ADC) are not required. Therefore, such devices have many advantages such as small size, light weight, extremely low price, and long service life.

Passive zero-power terminals may also support other power harvesting manners, and by harvesting energy (such as light energy, thermal energy, kinetic energy, mechanical energy, etc.) from the environment, the zero-power terminals obtain power to drive circuitry, thereby supporting the terminal devices to perform communication.

### 2. Semi-passive zero-power devices

Semi-passive zero-power devices do not have conventional batteries installed therein, but may use an RF power harvesting module to harvest radio wave energy or use a power harvesting module to harvest energy (such as solar energy, thermal energy, mechanical vibration energy, etc.) from the environment, and store the harvested energy in an energy storage unit (such as a capacitor). After obtaining the energy, the energy storage unit may drive a low-power chip circuit of the zero-power device, enabling demodulation of the forward link signal, modulation of the backward link signal and other operations. For a backscatter link, the zero-power device performs signal transmission by using a backscatter implementation approach. Alternatively, the zero-power device may use a low-power transmitter to perform active transmitting communication on the basis of the harvested energy.

It can be seen that semi-passive zero-power devices do not need a built-in battery to drive either the forward link or the backward link. Although the energy stored in the capacitor is used in operation, the energy is derived from the radio energy harvested by the power harvesting module. Therefore, semi-passive zero-power devices are also zero-power devices in the truest sense.

Semi-passive zero-power devices inherit many advantages of passive zero-power devices, and hence have many advantages such as small size, light weight, extremely low price, and long service life.

### 3. Active zero-power devices

The zero-power device used in some scenarios may also be an active zero-power device, and such a device may have a built-in battery. The battery is used to drive the low-power chip circuitry of the zero-power device, enabling demodulation of the forward link signal, modulation of the backward link signal and other operations. However, for a backscatter link, the zero-power device performs signal transmission by using a backscatter implementation approach. Therefore, the zero power aspect of this type of device mainly lies in that signal transmission over the backward link does not require the power of the terminal itself but relies on backscattering.

Active zero-power terminals have a built-in battery to supply power to the RFID chip, so as to increase the reading/writing distance of the active zero-power terminals and improve communication reliability. Therefore, such terminals are applied to some scenarios with relatively high requirements on the communication distance, the reading latency, etc.

In some scenarios, zero-power devices may be classified as follows on the basis of transmitter types:

### 1) Zero-power devices based on backscattering

These zero-power devices transmit uplink data using the foregoing backscatter techniques. Such zero-power devices do not have an active transmitter capable of active transmission, but only have a backscatter transmitter. Therefore, when these zero-power devices transmit data, a network device is required to provide a carrier, and the zero-power devices perform back scattering on the basis of the carrier, thereby achieving data transmission.

2) Zero-power devices based on active transmitters

These zero-power devices use active transmitters with active transmission capabilities to perform uplink data transmission. Therefore, when transmitting data, such zero-power devices can transmit data by using their own active transmitters, without requiring a network device to provide a carrier. The active transmitters suitable for the zero-power devices may include, for example, ultra-low-power ASK transmitters, ultra-low-power FSK transmitters, or the like, and when a signal of 100 uw is transmitted, the overall power consumption may be reduced to 400 uw to 600 uw.

### 3) Zero-power devices equipped with both backscatter transmitters and active transmitters

These zero-power devices may support both backscatter transmitters and active transmitters. Such zero-power devices may determine, according to different conditions (for example, battery status and available ambient energy) or on the basis of scheduling by a network device, which signal transmitting method to use, that is, whether to use an active transmitter or a backscatter transmitter to perform signal transmission.

With the rapid development of the Internet of Things, existing Internet of Things communication technologies can no longer meet the Internet of Things communication requirements in many scenarios, such as the following:

### 1. Harsh communication environments

Some Internet of Things scenarios may face extreme conditions, such as high temperature, extremely low temperature, high humidity, high pressure, high radiation, or high-speed motion; for example, ultra-high voltage substations, rail monitoring for high-speed trains, environmental monitoring in frigid regions, industrial production lines, etc. In these scenarios, existing Internet of Things terminals may not be operable due to the working environment limitations of the conventional power supply. In addition, extreme working environments are also disadvantageous for IoT maintenance, such as battery replacement.

### 2. Requirement for extremely small-size terminal forms

In some Internet of Things communication scenarios, such as food traceability, commodity circulation, and smart wearable, terminals is required to be extremely compact to facilitate use in these scenarios. For example, Internet of Things terminals for product management in the supply chain generally take the form of electronic tags, which are embedded into product packaging in a very compact form. For another example, lightweight wearable devices can improve user experience while meeting user needs.

### 3. Ultra-low-cost Internet of Things communication requirements

Many Internet of Things communication scenarios demand extremely low-cost IoT terminals to improve competitiveness over other alternative technologies. For example, in logistics or warehousing scenarios, to facilitate management of a large quantity of circulating items, an IoT terminal may be attached to each item, so as to enable accurate management in the entire logistics process and the entire cycle through communication between the terminal and a logistics network. These scenarios require IoT terminals to be cost-competitive enough.

Therefore, in order to address these unmet communication demands in IoT, there is a need to develop ultra-low-cost, extremely small-sized, battery-free/maintenance-free IoT technologies in cellular networks, and zero-power IoT precisely meets this requirement.

Zero-power Internet of Things (IoT) may also be referred to as ambient power enabled IoT (ambient IoT or AMP IoT for short). Zero-power devices may also be referred to as ambient IoT devices or AMP IoT devices. An ambient IoT device may refer to an IoT device using various types of ambient energy, such as RF energy, light energy, solar energy, thermal energy, or mechanical energy. Such a device may have no energy storage capability, or may have very limited energy storage capability, such as using a capacitor with tens of uF of capacitance.

Ambient IoT may be used in at least the following four scenarios:
1. object identification, such as logistics, production-line product management, and supply chain management;
2. environmental monitoring, such as temperature, humidity and harmful gas monitoring in work environments and natural environments;
3. positioning, such as indoor positioning, smart item tracking, and production-line item localization; and
4. intelligent control, such as intelligent control of various appliances in smart homes (turning on/off an air conditioner, and adjusting temperature), and intelligent control of various facilities in agricultural greenhouse systems (automatic irrigation and fertilization).

### II. Cellular Passive Internet of Things

With the increase of applications in the 5G industry, the types and application scenarios of connected objects are increasing, placing higher demands on both the cost and power consumption of communication terminals. The application of battery-free and low-cost passive Internet of Things devices has become a key technology for cellular IoT, which enriches the types and number of connected terminals in 5G networks and truly realizes the Internet of Everything. Passive Internet of Things devices can be based on zero-power communication technology, such RFID technology, and are extended on this basis to be applicable to cellular IoT.

In some scenarios, because different regions or countries have different frequency specifications, and channel bandwidths specified for AMP devices in different regions or countries may be different, how to achieve coexistence of AMP devices across different regions or countries is an urgent issue to be addressed.

To facilitate understanding of the technical solution in the embodiments of the present application, the technical solution of the present application will be described in detail below using specific embodiments. The above related technologies may be arbitrarily combined with the technical solution of the embodiments of the present application as optional solutions, all of which fall within the scope of protection of the embodiments of the present application. The embodiments of the present application include at least some of the following content.

FIG. 6 is a schematic diagram of a method 200 for wireless communication according to an embodiment of the present application. As shown in FIG. 6, the method 200 includes at least some of the following content:

In S210, a transmitting end device transmits a preamble signal and a target signal. The preamble signal is ahead of the target signal, and a target receiving device of the target signal is an ambient power (AMP) device.

Correspondingly, in S220, a non-AMP device receives the preamble signal.

In S230, the AMP device receives the target signal.

In some embodiments, the AMP device may also receive the preamble signal.

For example, when the bandwidth of the preamble signal is narrow, if the processing capability of the AMP device can process a signal of said bandwidth, the AMP device may receive the preamble signal.

It should be understood that the embodiments of the present application may be applied to a WIFI system (or a system supporting the 802.11 protocol), or may be applied to a cellular communication system, such as an NR system, an LTE system or the like.

In some embodiments, the 802.11 protocol may include 802.11 ah, or may include other protocols of the 802.11 family and future new protocols in the 802.11 family.

It should be understood that the preamble signal in the embodiments of the present application may be replaced with other signals that have similar functions in the communication system, such as a synchronization signal in a cellular communication system, specifically, for example, a synchronization signal block (SSB). The present application is not limited thereto.

In some embodiments, the transmitting end device may refer to a network device in a communication system, such as a base station in a cellular communication system, specifically, for example, a gNB in an NR system, or may be an AP in a WIFI system, which is not limited in the present application.

In some embodiments, the non-AMP device may be an existing device in a communication system, or may be referred to as a legacy device.

For example, the non-AMP device may include a UE in an NR system, or may include a STA in a WIFI system.

In the embodiments of the present application, the AMP device is also referred to as an ambient power Internet of Things device (AMP IoT device or ambient IoT device), a zero-power device, or a zero-power terminal.

In some embodiments, the AMP device may be a type of device defined according to characteristics such as the complexity, power consumption, power source, communication mode, and used waveform of the devices.

For example, the AMP device may be a device that performs communication on the basis of ambient power. For example, the AMP device uses ambient power such as wireless RF energy, light energy, solar energy, thermal energy, and mechanical energy to obtain energy for communication.

For another example, the AMP device may be a type of device with low complexity or using a new waveform, for example, performing communication by using a low-order modulation mode, a simple waveform, or a signal with a relatively small bandwidth.

For another example, the AMP device may be a type of device that uses a back scattering communication mode.

In some embodiments, the AMP device may also support an active transmitting communication mode.

In the embodiments of the present application, the target signal is also referred to as an AMP signal.

In some embodiments, the AMP signal may be used to carry control information and/or data information transmitted to the AMP device.

In some embodiments, the preamble signal may be used by the non-AMP device to identify that the channel is being used by an AMP device, or that the transmitting end device is performing communication with an AMP device by using the channel. In other words, the signal (that is, the target signal) after the preamble signal is an AMP signal, or the target receiving device of the signal (that is, the target signal) after the preamble signal is an AMP device.

In some embodiments, the preamble signal and the target signal may be regarded as forming a frame, and when the target receiving device of the target signal is an AMP device, the frame is also referred to as an AMP frame, wherein the preamble signal is used to indicate whether the frame is an AMP frame.

It should be understood that, in the embodiments of the present application, the preamble signal may implicitly or explicitly indicate that the signal after the preamble signal is an AMP signal, which is not limited in the present application.

The design of the preamble signal and the target signal will be described below with reference to specific embodiments.

### Embodiment 1:

In some embodiments, the bandwidth of the preamble signal is determined according to a preset rule, that is, the bandwidth of the preamble signal meets the preset rule. For example, the preamble signal may be a legacy preamble signal (legacy preamble prefixing). In this case, the legacy device can detect the preamble signal.

In some embodiments, the preset rule may include a channel bandwidth limitation specified by some regions or countries, and/or a channel bandwidth limitation specified by a standard protocol.

For example, in 802.11 ah, the minimum channel bandwidth is specified as 1 MHz.

For another example, the frequency regulation of some regions or countries (such as the United States) permits the use of 1 MHz in S1G, which is referred to as a first preset rule.

For another example, in some regions or countries (such as China and the European Union), a 1 MHz channel bandwidth for a preamble signal is not allowed, and only channel bandwidths of 250 kHz and 200 kHz are allowed, respectively, which is referred to as a second preset rule.

In some specific designs, the bandwidth of the preamble signal may be 1 MHz. The bandwidth design meets the first preset rule, which is applicable to specific regions or countries such as the United States.

In some other specific designs, the bandwidth of the preamble signal may be 250 kHz or 200 kHz. The bandwidth design meets the second preset rule, which is applicable to specific regions or countries such as China or the European Union.

When the bandwidth of the preamble signal is determined according to the preset rule, for the legacy device, how to distinguish whether the subsequent signal is an AMP signal (or whether the current frame is an AMP frame) is a further problem that needs to be addressed.

In some embodiments of the present application, the preamble signal can be used to explicitly or implicitly indicate whether the subsequent signal is an AMP signal, or whether the current frame is an AMP frame.

For example, whether the subsequent signal is an AMP signal is indicated by a format of the preamble signal and/or indication information carried in the preamble signal.

Correspondingly, the legacy device may determine, according to the format of the preamble signal and/or the indication information carried in the preamble signal, whether the subsequent signal is an AMP signal.

Manner 1: Whether or not the subsequent signal is an AMP signal is indicated by the format of the preamble signal.

In some embodiments, the format of the preamble signal is a specific format, indicating that the signal transmitted after the preamble signal is an AMP signal, or in other words, whether the current frame is an AMP frame. Optionally, the specific format is predefined, or may be a format agreed upon by a transmitting end device and a legacy device in a communication system. When the legacy device successfully detects a preamble signal in said format, the legacy device may determine that the subsequent signal is an AMP signal.

Manner 2: Whether the subsequent signal is an AMP signal is indicated by the indication information carried in the preamble signal.

In some embodiments, the preamble signal includes first indication information. The first indication information is used to indicate whether the signal transmitted after the preamble signal is an AMP signal, or whether the current frame is an AMP frame.

For example, the first indication information is carried by using a reserved bit of the preamble signal. Optionally, a 1 reserved bit in the preamble signal may be used to indicate whether the current frame is an AMP frame. For example, the value of the 1bit being 1 indicates that the current frame is an AMP frame, and the value of the 1 bit being 0 indicates that the current frame is not an AMP frame.

By adopting manner 2, when the legacy device learns, by decoding the reserved bit in the preamble signal, that the subsequent signal is not an AMP signal, the legacy device does not need to continue to process the remaining preamble signal, which is advantageous for reducing the power consumption of the legacy device.

In some embodiments of the present application, the bandwidth of the target signal may be designed according to the processing capability of the AMP device and/or a preset rule.

Because the AMP device has a relatively low processing capability, the operating bandwidth of the AMP device is usually lower than that of the legacy device, for example, the bandwidth of the target signal is less than or equal to 1 MHz.

In some embodiments, the bandwidth of the target signal is fixed.

For example, the bandwidth of the target signal may be N * 250 kHz or M * 200 kHz, where N and M are fixed values.

For example, N is fixed to 1, 2, 3, or 4.

For example, M is fixed to 1, 2, 3, 4, or 5.

That is, the bandwidth of the target signal is one of 200 kHz, 250 kHz, 400 kHz, 500 kHz, 600 kHz, 750 kHz, 800 kHz, 1000 kHz, and 1250 kHz.

In some embodiments, the bandwidth of the target signal is variable.

For example, the candidate bandwidth of the target signal includes N * 250 kHz and/or M * 200 kHz, where N and M are positive integers.

In some specific embodiments, a set of candidate values of N is {1, 2, 3, 4} or a subset of {1, 2, 3, 4}.

In some specific embodiments, a set of candidate values of M is {1, 2, 3, 4, 5} or a subset of {1, 2, 3, 4, 5}.

When the bandwidth of the target signal is variable, the transmitting end device may further indicate the channel bandwidth of the AMP signal.

For example, the channel bandwidth of the AMP signal is indicated by using the preamble signal, and specifically, for example, the channel bandwidth of the AMP signal is indicated by using the format of the preamble signal and/or by the indication information carried in the preamble signal.

Correspondingly, the legacy device may determine the channel bandwidth of the AMP signal according to the format of the preamble signal and/or the indication information carried in the preamble signal.

In some implementations, the preamble signal may be configured in a plurality of formats, and each format may be used to indicate one bandwidth.

For example, different formats of the preamble signal correspond to different values of N or M.

In some embodiments, the correspondence between the format of the preamble signal and the bandwidth of the AMP signal may be predefined, or may be agreed on by a transmitting end device and a legacy device in a communication system.

Therefore, on the basis of this manner, when receiving the preamble signal, the legacy device may determine the bandwidth of the AMP signal according to the format of the preamble signal.

In some other implementations, the preamble signal includes second indication information. The second indication information is used to indicate the bandwidth of the target signal.

For example, the second indication information is carried by using reserved bit(s) of the preamble signal. Optionally, the bandwidth of the AMP signal may be indicated by K reserved bits in the preamble signal. K is determined according to the number of candidate bandwidths of the AMP signal. As an example, if the number of candidate bandwidths is 4, then 2 bits may be used to indicate the bandwidth of the AMP signal, for example, different values of the 2 bits are used to indicate different bandwidths of the AMP signal.

In some embodiments, the legacy device may need to perform transmission by using a neighboring channel of the AMP signal, and the legacy device may estimate a leakage status of the neighboring channel according to the bandwidth of the AMP signal.

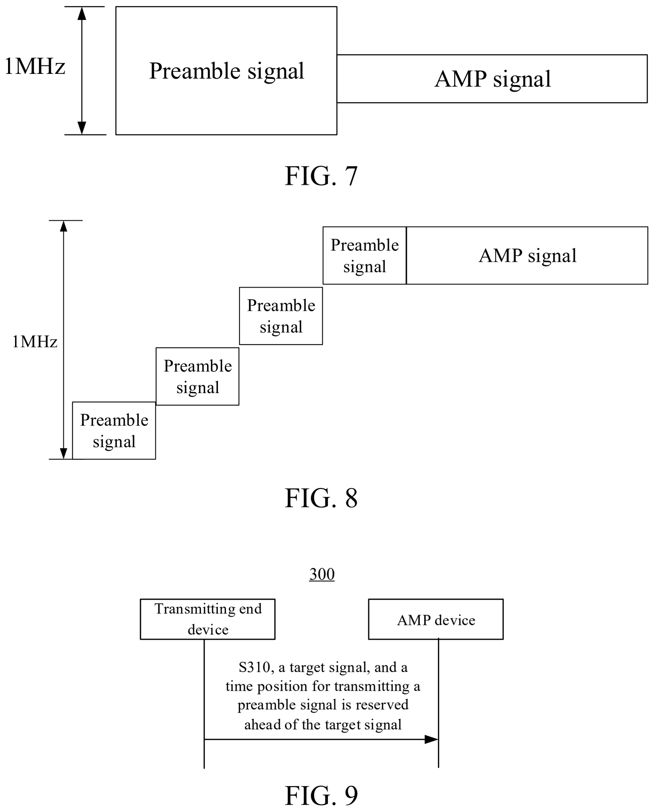

FIG. 7 is a schematic diagram of an AMP frame format according to an embodiment of the present application. In the example of FIG. 7, the channel bandwidth of the preamble signal is 1 MHz as specified in some regions or countries, and therefore, the legacy device can detect the preamble signal, and may transmit an AMP signal after the preamble signal. The AMP signal may be used to carry control information and/or data information transmitted to an AMP device, and the channel bandwidth of the AMP signal is less than the channel bandwidth of the preamble signal.

### Embodiment 2:

In some embodiments, the bandwidth of the preamble signal is identical to the bandwidth of the target signal.

In some scenarios, for some countries or regions such as China and the European Union, a 1 MHz channel bandwidth for a preamble signal is not allowed, and the allowed channel bandwidths are 250 kHz and 200 kHz, respectively. In this case, the preamble signal may be designed to have the same channel bandwidth as the AMP signal.

In some embodiments, the bandwidth of the preamble signal is fixed.

For example, the bandwidth of the preamble signal may be P * 250 kHz or Q * 200 kHz, where P and Q are fixed values.

For example, P is fixed to 1, 2, 3, or 4.

For example, Q is fixed to 1, 2, 3, 4, or 5.

That is, the bandwidth of the preamble signal is one of 200 kHz, 250 kHz, 400 kHz, 500 kHz, 600 kHz, 750 kHz, 800 kHz, 1000 kHz, and 1250 kHz.

In some embodiments, the bandwidth of the preamble signal is variable.

For example, a candidate bandwidth of the preamble signal includes P * 250 kHz and/or Q * 200 kHz, where P and Q are positive integers.

In some specific embodiments, a set of candidate values of P is {1, 2, 3, 4} or a subset of {1, 2, 3, 4}.

In some specific embodiments, a set of candidate values of Q is {1, 2, 3, 4, 5} or a subset of {1, 2, 3, 4, 5}.

In Embodiment 2, the bandwidth design of the preamble signal may be regarded as meeting the second preset rule, that is, it meets the channel bandwidth regulations of some countries or regions (for example, China and the European Union), but does not meet channel bandwidth regulations of some other regions or countries (for example, the United States) (that is, it does not meet the first preset rule). In some other regions or countries (for example, the United States), the legacy device can detect only a 1 MHz preamble signal, and cannot detect a preamble signal based on the foregoing design. On this basis, the embodiments of the present application provide the following solution to enable legacy devices in some other regions or countries (such as the United States) to identify the preamble signal.

As a solution, the transmit power of the preamble signal is increased to the same level as that of a preamble signal detectable by a legacy device.

That is, the transmit power of the preamble signal is determined according to the transmit power of a reference preamble signal, wherein the bandwidth of the reference preamble signal is determined according to the first preset rule, for example, the bandwidth of the reference preamble signal is 1 MHz.

Correspondingly, the legacy device may detect the preamble signal of the AMP signal by performing power detection on the received signal.

As another solution, the preamble signal is transmitted by means of frequency hopping, so that the bandwidth of the preamble signal meets the first preset rule.

When the preamble signal is transmitted by means of frequency hopping, statistically, the channel bandwidth of the preamble signal reaches the channel bandwidth required by the first preset rule.

For example, the channel bandwidth of the preamble signal is 250 kHz, and frequency hopping is performed four times, so that statistically, the overall channel bandwidth is 1 MHz, which can meet the 1 MHz requirement specified by the first preset rule. Thus, the legacy device can detect the preamble signal.

In Embodiment 2, the transmitting end device may also indicate, in a manner similar to that in Embodiment 1, whether the signal after the preamble signal is an AMP signal, or whether the current frame is an AMP frame, which will not be repeated here for the sake of brevity.

In Embodiment 2, the transmitting end device may also indicate the bandwidth of the AMP signal in a manner similar to that in Embodiment 1, which will not be repeated here for the sake of brevity.

In Embodiment 2, when the bandwidth of the preamble signal is designed according to the second preset rule, for a legacy device that complies with the second preset rule, it is possible to identify, by receiving the preamble signal, that an AMP device is occupying a channel. To ensure that a legacy device that complies with the first preset rule can also identify that an AMP device is occupying the channel, a solution is to control the transmit power of the preamble signal to reach a transmit power level at which the bandwidth of the preamble signal meets the first preset rule, so that the legacy device that complies with the first preset rule can determine, by performing power detection on a received signal, that an AMP device is occupying the channel. Another solution is to transmit the preamble signal by means of frequency hopping, so that the bandwidth of the preamble signal meets the first preset rule. In this way, the legacy device that complies with the first preset rule may identify, by receiving the preamble signal, that an AMP device is occupying the channel, thereby solving the problem of coexistence of AMP devices across different regions or countries.

In conclusion, in the embodiments of the present application, the AMP frame is designed to include the preamble signal and the AMP signal, and the preamble signal is used to indicate that the subsequent signal is an AMP signal. In this way, a legacy device can identify, by means of the preamble signal, that an AMP device is occupying the channel, thereby ensuring the compatibility of the AMP device and the legacy device when they coexist in the communication system.

In some implementations, the bandwidth of the preamble signal may be designed according to a preset rule, so as to ensure backward compatibility of the preamble signal, and further indicate, by means of the format of the preamble signal or the indication information carried in the preamble signal, that the subsequent signal is an AMP signal. In this way, the legacy device can identify, by detecting the preamble signal, that an AMP device is occupying the channel.

In some other implementations, the bandwidth of the preamble signal is identical to the bandwidth of the AMP signal, and further, the transmit power of the preamble signal is designed to be equivalent to the transmit power of a preamble signal whose bandwidth meets a preset rule, so that the legacy device may detect the preamble signal of the AMP signal by performing power detection on a received signal; or the preamble signal is transmitted by means of frequency hopping, so that the bandwidth of the preamble signal meets the preset rule, thereby solving the problem of coexistence of AMP devices across different regions or countries.

FIG. 9 is a schematic interaction diagram of a method 300 for wireless communication according to another embodiment of the present application. The method 300 may be performed by the network device in the communication system shown in FIG. 1, and as shown in FIG. 9, the method 300 includes the following content:

In S310, a transmitting end device transmits a target signal. A time domain resource for transmitting a preamble signal is reserved ahead of the target signal, and a target receiving device of the target signal is an ambient power (AMP) device, or the transmitting end device is an AMP device.

It should be understood that the embodiments of the present application may be applied to a WIFI system (or a system supporting the 802.11 protocol), or may be applied to a cellular communication system, such as an NR system, an LTE system or the like.

In some embodiments, the 802.11 protocol may include 802.11 ah, or may include other protocols of the 802.11 family and future new protocols in the 802.11 family.

It should be understood that the preamble signal in the embodiments of the present application may be replaced with other signals that have similar functions in the communication system, such as a synchronization signal in a cellular communication system, specifically, for example, a synchronization signal block (SSB). The present application is not limited thereto.

In some embodiments, the transmitting end device may refer to a network device in a communication system, such as a base station in a cellular communication system, specifically, for example, a gNB in an NR system, or may be an AP in a WIFI system, which is not limited in the present application.

In this case, the receiving end device of the target signal may be an AMP device.

In some other embodiments, the transmitting end device may be an AMP device.

In this case, the receiving end device of the target signal may be an AMP device, a network device, or a legacy device.

That is, when the transmitting end device is an AMP device, the target signal may be a signal transmitted by one AMP device to another AMP device, a signal transmitted by an AMP device to a network device, or a signal transmitted by an AMP device to a legacy device.

In some other embodiments, the transmitting end device may be a legacy device in a communication system, such as a UE in a cellular communication system, a STA in a WIFI system, or the like, which is not limited in the present application.

In this case, the receiving end device of the target signal may be an AMP device.

In the method 300, it may be considered that the transmitting end device transmits a null signal as a pseudo preamble signal.

In the method 300, it may be considered that the AMP frame includes the target signal, and a time domain resource for transmitting the preamble signal is reserved ahead of the target signal.

The AMP frame is designed to include the target signal and the time domain resource for transmitting the preamble signal is reserved ahead of the target signal, so that in a system using the preamble signal or a similar signal, the transmitting end device can transmit the preamble signal over the reserved time domain resource for transmitting the preamble signal, and transmit the target signal after the preamble signal. The bandwidth of the preamble signal may be designed according to the frequency regulations of different regions or countries, thereby solving the problem of coexistence of AMP devices across different regions or countries.

For example, in some regions or countries (for example, the United States), the transmitting end device may transmit the preamble signal over the reserved time domain resource for transmitting the preamble signal, and transmit the target signal after the preamble signal. The bandwidth of the preamble signal may be 1 MHz.

For another example, in some other regions or countries (for example, China or the European Union), the transmitting end device may transmit the preamble signal over the reserved time domain resource for transmitting the preamble signal, and transmit the target signal after the preamble signal. The bandwidth of the preamble signal may be an integer multiple of 250 kHz or an integer multiple of 200 kHz, or the transmitting end device may also choose not to transmit any signal over the reserved time domain resource for transmitting the preamble signal.

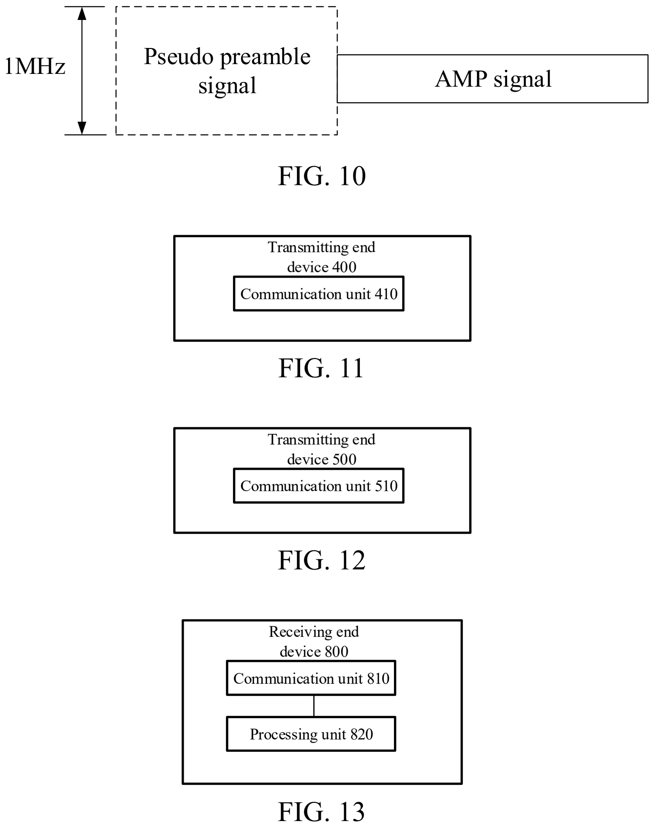

FIG. 10 shows a schematic format diagram of an AMP frame provided in an embodiment of the present application. As shown in FIG. 10, a time domain resource for transmitting a preamble signal is reserved ahead of a target signal. In some regions or countries (for example, the United States), the transmitting end device may transmit the preamble signal over the reserved time domain resource for transmitting the preamble signal, and transmit the target signal after the preamble signal. The bandwidth of the preamble signal may be 1 MHz.

In some embodiments, the transmitting end device, over the reserved time domain resource for transmitting the preamble signal, may remain silent to devices other than the target receiving device. Correspondingly, the other devices need to know that the time domain resource is occupied by an AMP device and is unavailable for transmission.

In some implementations, the transmitting end device reserves the time domain resource for transmitting the preamble signal by setting timers (for example, network allocation vectors) of the devices other than the target receive device. For example, when the transmitting end device is a network device such as an AP, the time domain resource for transmitting the preamble signal may be reserved by setting the timers of the other devices.

In some specific embodiments, the transmitting end device transmits first signaling to the devices other than the target receiving device. The first signaling is used to set the timers of the other devices, for example, the timers are configured for the other devices to back off after the time domain resource for transmitting the preamble signal.

In some embodiments, the first signaling is media access control (MAC) signaling.

In some other implementations, the transmitting end device sets timers of devices other than the target receive device by means of a network device (for example, an access point device), to reserve the time domain resource for transmitting the preamble signal. For example, when the transmitting end device is an AMP device or a legacy device, the timers of the other devices may be set by means of the network device to reserve the time domain resource for transmitting the preamble signal.

For example, the transmitting end device transmits third indication information to the network device (for example, an access point device). The third indication information is used to instruct the access point device to set the timers of the devices other than the target receiving device, to reserve the time domain resource for transmitting the preamble signal.

In some embodiments, the third indication information may further indicate identification information of the target receiving device.

Therefore, in the embodiments of the present application, by setting the timers of the other devices to appropriate values, the other devices consider that the reserved time domain resource for transmitting the preamble signal belongs to a frame of the transmitting end device, that is, a channel on the time domain resource is being occupied.

In some embodiments of the present application, the bandwidth of the target signal may be designed according to the processing capability of the AMP device and/or a preset rule.

Due to the limited processing capability of AMP devices, the operating bandwidth of AMP devices is usually lower than that of legacy devices. For example, the bandwidth of the target signal is less than or equal to 1 MHz.

In some embodiments, the bandwidth of the target signal is fixed.

For example, the bandwidth of the target signal may be N * 250 kHz or M * 200 kHz, where N and M are fixed values.

For example, N is fixed to 1, 2, 3, or 4.

For example, M is fixed to 1, 2, 3, 4, or 5.

That is, the bandwidth of the target signal is one of 200 kHz, 250 kHz, 400 kHz, 500 kHz, 600 kHz, 750 kHz, 800 kHz, 1000 kHz, and 1250 kHz.

In some embodiments, the bandwidth of the target signal is variable.

For example, the candidate bandwidth of the target signal includes N * 250 kHz and/or M * 200 kHz, where N and M are positive integers.

In some specific embodiments, a set of candidate values of N is {1, 2, 3, 4} or a subset of {1, 2, 3, 4}.

In some specific embodiments, a set of candidate values of M is {1, 2, 3, 4, 5} or a subset of {1, 2, 3, 4, 5}.

It should be understood that the unit of the duration of the reserved time resource for transmitting the preamble signal is not limited in the present application, and may be, for example, distributed inter frame spacing (DIFT).

In conclusion, in the embodiments of the present application, the AMP frame is designed to include the target signal, and the time domain resource for transmitting the preamble signal is reserved ahead of the target signal. In this way, in a system using the preamble signal or a similar signal, the transmitting end device may transmit the preamble signal over the reserved time domain resource for transmitting the preamble signal, and transmit the target signal after the preamble signal. Tthe bandwidth of the preamble signal may be in accordance with frequency regulations of different regions or countries, thereby solving the problem of coexistence of AMP devices across different regions or countries.

The method embodiments of the present application have been described in detail above with reference to FIGS. 6 to 10, and apparatus embodiments of the present application will be described in detail below with reference to FIGS. 11 to 16. It should be understood that the apparatus embodiments and the method embodiments correspond to each other, and reference may be made to the method embodiments for similar descriptions.

FIG. 11 shows a schematic block diagram of a transmitting end device 400 according to an embodiment of the present application. As shown in FIG. 11, the transmitting end device 400 includes a communication unit 410.

The communication unit 410 is configured to transmit a preamble signal and a target signal. The preamble signal is ahead of the target signal, and the preamble signal is used to indicate that a target receiving device of the target signal is an ambient power (AMP) device.

In some embodiments, the bandwidth of the preamble signal is determined according to a preset rule.

In some embodiments, the bandwidth of the preamble signal is 1 MHz.

In some embodiments, the format of the preamble signal is a predefined format. The preamble signal in the predefined format is used to indicate that a target receiving device of a signal transmitted after the preamble signal is an AMP device.

In some embodiments, the preamble signal includes first indication information. The first indication information is used to indicate that a target receiving device of a signal transmitted after the preamble signal is an AMP device.

In some embodiments, a reserved bit of the preamble signal is used to carry the first indication information.

In some embodiments, a candidate bandwidth of the target signal includes N * 250 kHz and/or M * 200 kHz, where N and M are positive integers.

In some embodiments, N is a fixed value, and/or M is a fixed value.

In some embodiments, a set of candidate values of N is {1, 2, 3, 4} or is a subset of {1, 2, 3, 4}.

In some embodiments, a set of candidate values of M is {1, 2, 3, 4, 5} or is a subset of {1, 2, 3, 4, 5}.

In some embodiments, the format of the preamble signal is used to indicate the bandwidth of the target signal.

In some embodiments, different formats of the preamble signal correspond to different values of N or M.

In some embodiments, the preamble signal includes second indication information, wherein the second indication information is used to indicate the bandwidth of the target signal.

In some embodiments, a reserved bit of the preamble signal is used to carry the second indication information.

In some embodiments, the bandwidth of the preamble signal is identical to the bandwidth of the target signal.

In some embodiments, the candidate bandwidth of the preamble signal includes P * 250 kHz and/or Q * 200 kHz, where P and Q are positive integers.

In some embodiments, a set of candidate values of P is {1, 2, 3, 4} or a subset of {1, 2, 3, 4}.

In some embodiments, a set of candidate values of Q is {1, 2, 3, 4, 5} or a subset of {1, 2, 3, 4, 5}.

In some embodiments, the transmit power of the preamble signal is determined according to the transmit power of a reference preamble signal. The bandwidth of the reference preamble signal is determined according to a preset rule.

In some embodiments, the preamble signal is transmitted by using frequency hopping to make the bandwidth of the preamble signal meets the preset rule.

In some embodiments, the transmitting end device is an access point device.

Optionally, in some embodiments, the communication unit may be a communication interface or a transceiver, or an input/output interface of a communication chip or a system-on-chip.

It should be understood that the transmitting end device 400 according to the embodiments of the present application may correspond to the transmitting end device in the method embodiments of the present application, and the foregoing and other operations and/or functions of the units in the transmitting end device 400 are intended to implement corresponding processes of the transmitting end device in the methods shown in FIGS. 6 to 8, respectively, which will not be repeated here for the sake of brevity.

FIG. 12 shows a schematic block diagram of a transmitting end device 500 according to an embodiment of the present application. As shown in FIG. 12, the transmitting end device 500 includes a communication unit 510.

The communication unit 510 is configured to transmit a target signal. A time domain resource for transmitting a preamble signal is reserved ahead of the target signal, and a target receiving device of the target signal is an ambient power (AMP) device.

In some embodiments, the transmitting end device reserves the time domain resource for transmitting the preamble signal by setting a timer of a non-AMP device.

In some embodiments, the communication unit 510 is further configured to: transmit first signaling to the non-AMP device. The first signaling is used to set the timer of the non-AMP device, and the timer is configured for the non-AMP device to back off after the time domain resource reserved for transmitting the preamble signal.

In some embodiments, the first signaling is media access control (MAC) signaling.

In some embodiments, the transmitting end device is an access point device.

In some embodiments, the transmitting end device sets, by means of an access point device, the timer of the non-AMP device to reserve the time domain resource for transmitting the preamble signal.

In some embodiments, the communication unit 510 is further configured to: transmit third indication information to the access point device, wherein the third indication information is used to instruct the access point device to set the timer of the non-AMP device to reserve the time domain resource for transmitting the preamble signal.

In some embodiments, the transmitting end device is an AMP device.

In some embodiments, the timer of the non-AMP device includes a network allocation vector (NAV) timer.

In some embodiments, a candidate bandwidth of the target signal includes N * 250 kHz and/or M * 200 kHz, where N and M are positive integers.

In some embodiments, N is a fixed value, and/or M is a fixed value.

In some embodiments, a set of candidate values of N is {1, 2, 3, 4} or is a subset of {1, 2, 3, 4}.

In some embodiments, a set of candidate values of M is {1, 2, 3, 4, 5} or is a subset of {1, 2, 3, 4, 5}.

Optionally, in some embodiments, the communication unit may be a communication interface or a transceiver, or an input/output interface of a communication chip or a system-on-chip.

It should be understood that the transmitting end device 500 according to the embodiments of the present application may correspond to the transmitting end device in the method embodiments of the present application, and the foregoing and other operations and/or functions of the units in the transmitting end device 500 are intended to implement corresponding processes of the transmitting end device in the methods shown in FIGS. 9 to 10, respectively, which will not be repeated here for the sake of brevity.

FIG. 13 shows a schematic block diagram of a receiving end device 800 according to an embodiment of the present application. As shown in FIG. 13, the receiving end device 800 includes a communication unit 810 and a processing unit 820.

The communication unit 810 is configured to receive a preamble signal transmitted by a transmitting end device. The receiving end device is not an ambient power (AMP) device.

The processing unit 820 is configured to determine, according to the preamble signal, whether a target receiving device of a signal after the preamble signal is an AMP device.

In some embodiments, the processing unit 820 is further configured to: when a format of the preamble signal is a predefined format, determine that the target receiving device of the signal after the preamble signal is an AMP device.

In some embodiments, the processing unit 820 is further configured to: if the preamble signal comprises first indication information, and the first indication information indicates that the target receiving device of the signal after the preamble signal is an AMP device, determine that the target receiving device of the signal after the preamble signal is an AMP device.

In some embodiments, the first indication information is carried in a reserved bit of the preamble signal.

In some embodiments, the processing unit 820 is further configured to: perform power detection on the preamble signal to determine whether the target receiving device of the signal after the preamble signal is an AMP device.

In some embodiments, the bandwidth of the preamble signal is a bandwidth that meets a preset rule.

In some embodiments, the candidate bandwidth of the preamble signal includes P * 250 kHz and/or Q * 200 kHz, where P and Q are positive integers.

In some embodiments, a set of candidate values of P is {1, 2, 3, 4} or is a subset of {1, 2, 3, 4}.

In some embodiments, a set of candidate values of Q is {1, 2, 3, 4, 5} or is a subset of {1, 2, 3, 4, 5}.

In some embodiments, the transmitting end device is an access point device.

Optionally, in some embodiments, the communication unit may be a communication interface or a transceiver, or an input/output interface of a communication chip or a system-on-chip.

It should be understood that the receiving end device 800 according to the embodiments of the present application may correspond to the legacy device in the method embodiments of the present application, and the foregoing and other operations and/or functions of the units in the receiving end device 800 are intended to implement corresponding processes of the legacy device in the methods shown in FIGS. 6 to 10, respectively, which will not be repeated here for the sake of brevity.

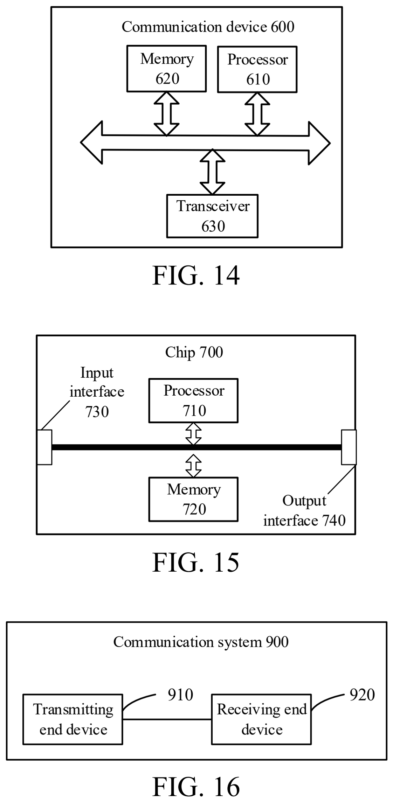

FIG. 14 is a schematic structural diagram of a communication device 600 provided in an embodiment of the present application. The communication device 600 shown in FIG. 14 includes a processor 610. The processor 610 may invoke and run a computer program from a memory so as to implement the method in the embodiments of the present application.

Optionally, as shown in FIG. 14, the communication device 600 may further include a memory 620. The processor 610 may invoke and run a computer program from the memory 620 so as to implement the method in the embodiments of the present application.

The memory 620 may be a separate component independent of the processor 610, or may be integrated into the processor 610.

Optionally, as shown in FIG. 14, the communication device 600 may further include a transceiver 630. The processor 610 may control the transceiver 630 to perform communication with other devices. Specifically, the transceiver may transmit information or data to other devices, or receive information or data transmitted by other devices.

The transceiver 630 may include a transmitter and a receiver. The transceiver 630 may further include an antenna, and the number of antennas may be one or more.

Optionally, the communication device 600 may specifically be the transmitting end device in the embodiments of the present application, and the communication device 600 may implement corresponding processes implemented by the transmitting end device in the respective methods of the embodiments of the present application, which will not be repeated here for the sake of brevity.

Optionally, the communication device 600 may specifically be the receiving end device or a legacy device in the embodiments of the present application, and the communication device 600 may implement corresponding processes implemented by the receiving end device or the legacy device in the respective methods of the embodiments of the present application, which will not be repeated here for the sake of brevity.

FIG. 15 is a schematic structural diagram of a chip according to an embodiment of the present application. The chip 700 shown in FIG. 15 includes a processor 710. The processor 710 may invoke and run a computer program from a memory so as to implement the method in the embodiments of the present application.

Optionally, as shown in FIG. 15, the chip 700 may further include a memory 720. The processor 710 may invoke and run a computer program from the memory 720 so as to implement the method in the embodiments of the present application.

The memory 720 may be a separate component independent of the processor 710, or may be integrated into the processor 710.

Optionally, the chip 700 may further include an input interface 730. The processor 710 may control the input interface 730 to perform communication with other devices or chips. Specifically, the input interface may obtain information or data transmitted by other devices or chips.

Optionally, the chip 700 may further include an output interface 740. The processor 710 may control the output interface 740 to perform communication with other devices or chips. Specifically, the output interface may output information or data to other devices or chips.

Optionally, the chip may be applied to the transmitting end device in the embodiments of the present application, and the chip may implement corresponding processes implemented by the transmitting end device in the respective methods of the embodiments of the present application, which will not be repeated here for the sake of brevity.

Optionally, the chip may be applied to the receiving end device or the legacy device in the embodiments of the present application, and the chip may implement corresponding processes implemented by the receiving end device or the legacy device in the respective methods of the embodiments of the present application, which will not be repeated here for the sake of brevity.

It should be understood that the chip mentioned in the embodiment of the present application may also be referred to as a system-level chip, a system chip, a chip system, or a system-on-chip chip, or the like.

FIG. 16 is a schematic block diagram of a communication system 900 provided in an embodiment of the present application. As shown in FIG. 16, the communication system 900 includes a transmitting end device 910 and a receiving end device 920.

The transmitting end device 910 may be configured to implement corresponding functions implemented by the transmitting end device in the methods described above, and the receiving end device 920 may be configured to implement corresponding functions implemented by the receiving end device in the methods described above, which will not be repeated here for the sake of brevity.

It should be understood that the processor in the embodiments of the present application may be an integrated circuit chip with a signal processing capability. During implementation, each step in the method embodiments described above may be completed by an integrated logic circuit of hardware in a processor or instructions in the form of software. The above processor may be a general-purpose processor, a Digital Signal Processor (DSP), an Application Specific Integrated Circuit (ASIC), a Field Programmable Gate Array (FPGA) or other programmable logic devices, a discrete gate or transistor logic device, or a discrete hardware component. The various methods, steps, and logical block diagrams disclosed in the embodiments of the present application may be implemented or executed. The general-purpose processor may be a microprocessor, or the processor may also be any conventional processor, etc. The steps of the methods disclosed in combination with the embodiments of the present application may be directly executed and completed by a hardware decoding processor, or executed and completed by a combination of hardware and software modules in the decoding processor. Software modules may be located in a mature storage medium in the present field such as a random access memory, a flash memory, a read-only memory, a programmable read-only memory, an electrically erasable programmable memory, or a register. The storage medium is located in the memory, and the processor reads the information in the memory, and completes the steps of the above methods in combination with its hardware.

It can be understood that the memory in the embodiments of the present application may be a volatile memory or a nonvolatile memory, or may include both volatile and nonvolatile memories. The non-volatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM) or a flash memory. The volatile memory may be a random access memory (RAM), which acts as an external cache. By way of example, but not by way of limitation, many forms of RAMs are available, such as static random access memories (Static RAM, SRAM), dynamic random access memories (Dynamic RAM, DRAM), synchronous dynamic random access memories (Synchronous DRAM, SDRAM), double data rate synchronous dynamic random access memories (Double Data Rate SDRAM, DDR SDRAM), enhanced synchronous dynamic random access memories (Enhanced SDRAM, ESDRAM), synchronous link dynamic random access memories (Synchlink DRAM, SLDRAM) and direct memory bus random access memories (Direct Rambus RAM, DR RAM). It should be noted that the memory in the systems and methods described herein is intended to include, but is not limited to, the foregoing and any other suitable type of memory.

It should be understood that the above-mentioned memory is illustrative but not restrictive. For example, the memory in the embodiments of the present application may also be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM), a direct memory bus random access memory (Direct Rambus RAM, DR RAM), or the like. That is, the memory in the embodiments of the present application is intended to include, but is not limited to, the foregoing and any other suitable type of memory.

A computer-readable storage medium for storing a computer program is further provided in an embodiment of the present application.

Optionally, the computer-readable storage medium may be applied to the transmitting end device in the embodiments of the present application, and the computer program causes a computer to perform corresponding processes implemented by the transmitting end device in the respective methods of the embodiments of the present application, which will not be repeated here for the sake of brevity.

Optionally, the computer-readable storage medium may be applied to the receiving end device or the legacy device in the embodiments of the present application, and the computer program causes a computer to perform corresponding processes implemented by the receiving end device or the legacy device in the respective methods of the embodiments of the present application, which will not be repeated here for the sake of brevity.

A computer program product including computer program instructions is further provided in an embodiment of the present application.

Optionally, the computer program product may be applied to the transmitting end device in the embodiments of the present application, and the computer program instructions cause a computer to perform corresponding processes implemented by the transmitting end device in the respective methods of the embodiments of the present application, which will not be repeated here for the sake of brevity.

Optionally, the computer program product may be applied to the receiving end device or the legacy device in the embodiments of the present application, and the computer program instructions cause a computer to perform corresponding processes implemented by the receiving end device or the legacy device in the respective methods of the embodiments of the present application, which will not be repeated here for the sake of brevity.

A computer program is further provided in an embodiment of the present application.

Optionally, the computer program may be applied to the transmitting end device in the embodiments of the present application, and the computer program, when run on a computer, causes the computer to perform corresponding processes implemented by the transmitting end device in the respective methods of the embodiments of the present application, which will not be repeated here for the sake of brevity.

Optionally, the computer program may be applied to the receiving end device or the legacy device in the embodiments of the present application, and the computer program, when run on a computer, causes the computer to perform corresponding processes implemented by the receiving end device or the legacy device in the respective methods of the embodiments of the present application, which will not be repeated here for the sake of brevity.

A person skilled in the art can appreciate that the units and algorithm steps of the examples described in combination with the embodiments disclosed herein can be implemented by electronic hardware, or a combination of computer software and electronic hardware. These functions are executed in hardware or software, depending on the specific applications and design constraints of the technical solutions. A professional skilled person may use different methods for each specific application to implement the described functions, but said implementation should not be considered to exceed the scope of the present application.

It can be clearly understood by a person skilled in the art that for the convenience and brevity of the description, reference may be made to the corresponding processes in the foregoing method embodiments for the specific working process of the systems, apparatuses and units described above, which will not be repeated here.

In several embodiments provided by the present application, it should be understood that the disclosed systems, apparatuses, and methods may be implemented in other manners. For example, the apparatus embodiments described above are merely illustrative. For example, the division of the units is only a logical function division. During actual implementation, there may be other division methods. For example, a plurality of units or components may be combined or integrated into another system, or some features may be ignored or not implemented. Furthermore, the displayed or discussed coupling or direct coupling or communication connections may be by means of some interfaces, and the indirect coupling or communication connections of apparatuses or units may be in electrical, mechanical or other forms.

The units described as separate components may or may not be physically separated, and the components displayed as units may or may not be physical units, that is, they may be located in one place, or may be distributed to a plurality of network units. A part or all of the units may be selected according to actual needs to achieve the objective of the solution of the present embodiment.

In addition, the functional units in various embodiments of the present application may be integrated into one processing unit, or each unit may be individually physically present, or two or more units may be integrated into one unit.

If the functions described above are implemented in the form of software function units and sold or used as separate products, they may be stored in a computer-readable storage medium. On the basis of such understanding, a part of the technical solution of the present application that essentially contributes to the prior art, or a part of the technical solution may be embodied in the form of a software product, and the computer software product is stored in a storage medium, including several instructions used for making a computer device (which may be a personal computer, a server, a network device or the like) perform all or part of the steps of the methods described in the various embodiments of the present application. The foregoing storage medium includes: a U disk, a mobile hard disk, a read only memory (ROM), a random access memory (RAM), a magnetic disk, an optical disk, or various media that can store program codes.

The detailed description of the present application is merely described above, but the scope of protection of the present application is not limited thereto. Any person skilled in the art can easily conceive of changes or substitutions within the technical scope disclosed in the present application, and all of the changes or substitutions should be covered by the scope of protection of the present application. Therefore, the scope of protection of the present application should be defined by the scope of protection of the claims.

## Claims

1. A method for wireless communication, comprising:
transmitting, by a transmitting end device, a preamble signal and a target signal, wherein the preamble signal is ahead of the target signal, and the preamble signal is used to indicate that a target receiving device of the target signal is an ambient power (AMP) device.

2. The method according to claim 1, wherein a bandwidth of the preamble signal is determined according to a preset rule.

3. The method according to claim 2, wherein the bandwidth of the preamble signal is 1 MHz.

4. The method according to any one of claims 1 to 3, wherein a format of the preamble signal is a predefined format, and the preamble signal in the predefined format is used to indicate that a target receiving device of a signal transmitted after the preamble signal is an AMP device.

5. The method according to any one of claims 1 to 4, wherein the preamble signal comprises first indication information, and the first indication information is used to indicate that a target receiving device of a signal transmitted after the preamble signal is an AMP device.

6. The method according to claim 5, wherein a reserved bit of the preamble signal is used to carry the first indication information.

7. The method according to any one of claims 1 to 6, wherein a candidate bandwidth of the target signal comprises N * 250 kHz and/or M * 200 kHz, wherein N and M are positive integers.

8. The method according to claim 7, wherein N is a fixed value, and/or M is a fixed value.

9. The method according to claim 7, wherein a set of candidate values of N is {1, 2, 3, 4} or is a subset of {1, 2, 3, 4}.

10. The method according to claim 7 or 9, wherein a set of candidate values of M is {1, 2, 3, 4, 5} or is a subset of {1, 2, 3, 4, 5}.

11. The method according to any one of claims 1 to 10, wherein a format of the preamble signal is used to indicate a bandwidth of the target signal.

12. The method according to claim 11, wherein different formats of the preamble signal correspond to different values of N or M.

13. The method according to any one of claims 1 to 12, wherein the preamble signal comprises second indication information, and the second indication information is used to indicate a bandwidth of the target signal.

14. The method according to claim 13, wherein a reserved bit of the preamble signal is used to carry the second indication information.

15. The method according to claim 1, wherein a bandwidth of the preamble signal is identical to a bandwidth of the target signal.

16. The method according to claim 15, wherein a candidate bandwidth of the preamble signal comprises P * 250 kHz and/or Q * 200 kHz, wherein P and Q are positive integers.

17. The method according to claim 16, wherein a set of candidate values of P is {1, 2, 3, 4} or is a subset of {1, 2, 3, 4}.

18. The method according to claim 16 or 17, wherein a set of candidate values of Q is {1, 2, 3, 4, 5} or is a subset of {1, 2, 3, 4, 5}.

19. The method according to any one of claims 15 to 18, wherein a transmit power of the preamble signal is determined according to a transmit power of a reference preamble signal, wherein a bandwidth of the reference preamble signal is determined according to a preset rule.

20. The method according to any one of claims 15 to 18, wherein the preamble signal is transmitted by using frequency hopping to make the bandwidth of the preamble signal meets a preset rule.

21. The method according to any one of claims 1 to 20, wherein the transmitting end device is an access point device.

22. A method for wireless communication, comprising:
transmitting, by a transmitting end device, a target signal, wherein a time domain resource for transmitting a preamble signal is reserved ahead of the target signal, and a target receiving device of the target signal is an ambient power (AMP) device.

23. The method according to claim 22, wherein the transmitting end device reserves the time domain resource for transmitting the preamble signal by setting a timer of a non-AMP device.

24. The method according to claim 23, further comprising:
transmitting, by the transmitting end device, first signaling to the non-AMP device, wherein the first signaling is used to set the timer of the non-AMP device, and the timer is configured for the non-AMP device to back off after the time domain resource reserved for transmitting the preamble signal.

25. The method according to claim 24, wherein the first signaling is media access control (MAC) signaling.

26. The method according to any one of claims 23 to 25, wherein the transmitting end device is an access point device.

27. The method according to claim 22, wherein the transmitting end device sets, by means of an access point device, a timer of a non-AMP device to reserve the time domain resource for transmitting the preamble signal.

28. The method according to claim 27, further comprising:
transmitting, by the transmitting end device, third indication information to the access point device, wherein the third indication information is used to instruct the access point device to set the timer of the non-AMP device to reserve the time domain resource for transmitting the preamble signal.

29. The method according to claim 27 or 28, wherein the transmitting end device is an AMP device.

30. The method according to any one of claims 23 to 29, wherein the timer of the non-AMP device comprises a network allocation vector (NAV) timer.

31. The method according to any one of claims 22 to 30, wherein a candidate bandwidth of the target signal comprises N * 250 kHz and/or M * 200 kHz, where N and M are positive integers.

32. The method according to claim 31, wherein N is a fixed value, and/or M is a fixed value.

33. The method according to claim 31, wherein a set of candidate values of N is {1, 2, 3, 4} or is a subset of {1, 2, 3, 4}.

34. The method according to claim 31 or 33, wherein a set of candidate values of M is {1, 2, 3, 4, 5} or is a subset of {1, 2, 3, 4, 5}.

35. A method for wireless communication, comprising:
receiving, by a receiving end device, a preamble signal transmitted by a transmitting end device, wherein the receiving end device is not an ambient power (AMP) device; and
determining, according to the preamble signal, whether a target receiving device of a signal after the preamble signal is an AMP device.

36. The method according to claim 35, wherein the determining, according to the preamble signal, whether a target receiving device of a signal after the preamble signal is an AMP device comprises:
when a format of the preamble signal is a predefined format, determining that the target receiving device of the signal after the preamble signal is an AMP device.

37. The method according to claim 35, wherein the determining, according to the preamble signal, whether a target receiving device of a signal after the preamble signal is an AMP device comprises:
if the preamble signal comprises first indication information, and the first indication information indicates that the target receiving device of the signal after the preamble signal is an AMP device, determining that the target receiving device of the signal after the preamble signal is an AMP device.

38. The method according to claim 37, wherein the first indication information is carried in a reserved bit of the preamble signal.

39. The method according to claim 35, wherein the determining, according to the preamble signal, whether a target receiving device of a signal after the preamble signal is an AMP device comprises:
performing power detection on the preamble signal to determine whether the target receiving device of the signal after the preamble signal is an AMP device.

40. The method according to any one of claims 35 to 38, wherein a bandwidth of the preamble signal is a bandwidth that meets a preset rule.

41. The method according to any one of claims 36 to 39, wherein a candidate bandwidth of the preamble signal comprises P * 250 kHz and/or Q * 200 kHz, wherein P and Q are positive integers.

42. The method according to claim 41, wherein a set of candidate values of P is {1, 2, 3, 4} or is a subset of {1, 2, 3, 4}.

43. The method according to claim 41 or 42, wherein a set of candidate values of Q is {1, 2, 3, 4, 5} or is a subset of {1, 2, 3, 4, 5}.

44. The method according to any one of claims 35 to 43, wherein the transmitting end device is an access point device.

45. A transmitting end device, comprising:
a communication unit, configured to transmit a preamble signal and a target signal, wherein the preamble signal is ahead of the target signal, and the preamble signal is used to indicate that a target receiving device of the target signal is an ambient power (AMP) device.

46. A transmitting end device, comprising:
a communication unit, configured to transmit a target signal, wherein a time domain resource for transmitting a preamble signal is reserved ahead of the target signal, and a target receiving device of the target signal is an ambient power (AMP) device.

47. A receiving end device, comprising:
a communication unit, configured to receive a preamble signal transmitted by a transmitting end device, wherein the receiving end device is not an ambient power (AMP) device; and
a processing unit, configured to determine, according to the preamble signal, whether a target receiving device of a signal after the preamble signal is an AMP device.

48. A transmitting end device, comprising: a processor and a memory, wherein the memory is configured to store a computer program, and the processor is configured to invoke and run the computer program stored in the memory to perform the method according to any one of claims 1 to 21 or the method according to any one of claims 22 to 34.

49. A receiving end device, comprising: a processor and a memory, wherein the memory is configured to store a computer program, and the processor is configured to invoke and run the computer program stored in the memory to perform the method according to any one of claims 35 to 44.

50. A chip, comprising: a processor, configured to invoke and run a computer program from a memory, so that a device having the chip installed therein performs the method according to any one of claims 1 to 21, or the method according to any one of claims 22 to 34, or the method according to any one of claims 35 to 44.

51. A computer-readable storage medium, being configured to store a computer program, wherein the computer program causes a computer to perform the method according to any one of claims 1 to 21, or the method according to any one of claims 22 to 34, or the method according to any one of claims 35 to 44.

52. A computer program product, comprising computer program instructions, wherein the computer program instructions cause a computer to perform the method according to any one of claims 1 to 21, or the method according to any one of claims 22 to 34, or the method according to any one of claims 35 to 44.

53. A computer program, causing a computer to perform the method according to any one of claims 1 to 21, or the method according to any one of claims 22 to 34, or the method according to any one of claims 35 to 44.
